# EUROPÄISCHE PATENTSCHRIFT

(11) **EP 2 081 786 B1**
(45) Veröffentlichungstag und Bekanntmachung des Hinweises auf die Patenterteilung: **19.09.2012**
(21) Anmeldenummer: 07820698.4
(22) Anmeldetag: 28.09.2007
(51) Int. Cl.: B60J 3/02

(54) **VERSCHATTUNGSELEMENT SOWIE VERFAHREN ZU DESSEN HERSTELLUNG**
BLIND ELEMENT AND METHOD FOR ITS PRODUCTION
ÉLÉMENT D'OBSCURCISSEMENT ET SON PROCÉDÉ DE FABRICATION

(30) Priorität: 25.10.2006 DE 102006050119
(43) Veröffentlichungstag der Anmeldung: 29.07.2009
(73) Patentinhaber: G + B Pronova GmbH, 51427 Bergisch Gladbach (DE)
(72) Erfinder: ALTMEYER, Stefan, Prof. Dr., 41539 Dormagen (DE); MEBBEN, Sandra, 30451 Hannover (DE); ZOZGORNIK, Steffen, 51381 Leverkusen (DE)
(74) Vertreter: von Kreisler Selting Werner
(86) Internationale Anmeldenummer: PCT/EP2007/060311
(87) Internationale Veröffentlichungsnummer: WO 2008/049708

(56) Entgegenhaltungen:
- EP-A- 0 856 615
- EP-A- 1 767 964
- EP-A- 1 780 062
- DE-A1- 3 739 062
- US-A- 4 863 224

## Beschreibung

Die Erfindung betrifft ein Verschattungselement sowie ein Verfahren zur Herstellung eines Verschattungselements.

Bei einem Verschattungselement handelt es sich vorzugsweise um eine Kraftfahrzeug-Sonnenblende oder um ein Fenster-Verschattungselement, d.h. ein Verschattungselement für Räume.

Als Sonnenblenden für Kraftfahrzeuge sind schwenkbare intransparente Elemente bekannt, die im Bereich der Oberseite der Frontscheibe schwenkbar befestigt sind. Derartige Sonnenblenden weisen den Nachteil auf, dass insbesondere bei tiefstehender Sonne nicht nur die Sonne abgedeckt wird, sondern auch das Sichtfeld des Fahrers erheblich beeinträchtigt wird. Dies stellt ein erhebliches Sicherheitsrisiko dar.

Ferner ist es beispielsweise aus DE 198 18 361 bekannt, eine transparente Sonnenblende mit einer Tönung zu versehen. Eine derartige Sonnenblende hat den Nachteil, dass der Blendeffekt der Sonne nur verringert wird. Ferner wird durch die Tönung das Sichtfeld des Fahrers beeinträchtigt.

Ferner ist es aus DE 295 10 431 bekannt, eine Sonnenblende vorzusehen, die transparente und intransparente Bereiche aufweist. Diese Bereiche sind gegeneinander verschiebbar. Es handelt sich hierbei um eine aufwändige, in der Herstellung kostenintensive und schwierig handhabbare Sonnenblende.

Zur winkelselektiven Verschattung von Wohnräumen ist aus DE 44 33 629 eine Fenster-Verschattungseinrichtung bekannt, die holografisch-optische Elemente aufweist. Es handelt sich hierbei um ein zwar sehr effektives, jedoch teures FensterVerschattungselement.

Aus der nicht vorveröffentlichten EP 1 780 062 ist eine Vorrichtung zum Blockieren von Licht durch Verwendung von senkrecht zueinander polarisierten Platten beschrieben. Die beschriebene Vorrichtung kann beispielweise in ein Fahrzeugdach integriert werden. Soll Licht nicht hindurch gelassen werden, so werden zwei Platten mit senkrecht zueinander stehenden Polarisationsrichtungen übereinander geschoben, so dass das unpolarisierte Sonnenlicht vollständig blockiert wird. Sofern das Licht hindurch gelassen werden soll, wird eine der Platten zur Seite geschoben.

Aufgabe der Erfindung ist es, ein Verschattungselement zu schaffen, durch das eine winkelselektive Verschattung bei Reduzierung der Herstellungskosten möglich ist. Insbesondere ist es Aufgabe der Erfindung, eine KraftfahrzeugSonnenblende zu schaffen, die zu einer verringerten Einschränkung des Sichtfeldes des Fahrers führt.

Die Lösung der Aufgabe erfolgt durch ein Verschattungseiement gemäss Anspruch 1 sowie ein Verfahren zu dessen Herstellung gemäss Anspruch 12,

Das erfindungsgemässe Verschattungselement, bei dem es sich in besonders bevorzugter Ausführungsform um eine Kraftfahrzeug-Sonnenblende handelt, weist zwei einander gegenüber liegende transparente Flächenelemente, bei denen es sich insbesondere um transparente Folien handelt, auf. Die beiden Flächenelemente weisen auf den aufeinander zu weisenden Innenseiten Strukturelemente auf. Die Strukturelemente, bei denen es sich beispielsweise um Prismen handelt, sind derart ausgebildet, dass Licht innerhalb eines Winkelbereichs totalreflektiert wird, Licht dringt somit an einer Aussenseite eines Flächenelements in das Flächenelement ein, wobei es hierbei an der Aussenseite bei nicht senkrechtem Einfall zu der Aussenseite gebrochen wird. Aufgrund des Winkels des Strukturelements erfolgt eine Totalreflexion, bevor das Licht aus dem ersten Flächenelement austritt. Durch eine mehrfache, üblicherweise zweifache Reflexion des eintretenden Lichts wird das Licht zurück reflektiert. Erfindungsgemäss ist zwischen den beiden Flächenelementen eine Zwischenschicht angeordnet, die gegenüber dem Flächenelement einen unterschiedlichen Brechungsindex aufweist. Relevant ist insbesondere der Brechungsindexunterschied zwischen dem auf der Licht-Einfaliseite angeordneten Flächenelement und der Zwischenschicht. Durch die Wahl der Lage und der Form der Strukturelemente, d.h. durch die räumliche Anordnung einzelnen Oberflächenelemente der Innenseite, kann der Winkelbereich, in dem Totalreflexion stattfindet, definiert werden.

Prinzipiell wäre ein einzelnes derartiges Flächenelement ausreichend, um in einem bestimmten Bereich Totalreflexion hervorzurufen. Dies würde jedoch dazu führen, dass das außerhalb eines Winkelbereichs durch das Flächenelement hindurch tretende Licht derart stark gebrochen würde, dass aus Sicht des Betrachters hinter dem Verschattungselement angeordnete Objekte nur stark verzerrt sichtbar wären. Durch das erfindungsgemäße Vorsehen eines zweiten Flächenelements kann die Verzerrung erheblich reduziert werden. Insbesondere bei dem Vorsehen von Prismen als Strukturelemente erfolgt beispielsweise nur ein Parallelversetzen der durch das Verschattungselement hindurch tretenden Strahlung. Objekte, die für den Betrachter hinter dem Verschattungselement in einem Winkel angeordnet sind, bei dem keine Totalreflexion auftritt, können somit weiterhin gut erkannt werden.

In besonders bevorzugter Ausführungsform weist das Verschattungselement Flächenelemente mit unterschiedlichen Reflexionsbereichen auf. Besonders eines der beiden Flächenelemente ist somit derart ausgebildet, dass an der Innenseite unterschiedliche Strukturelemente angeordnet sind. Insbesondere weisen die beiden Flächenelemente aufeinanderzuweisende Strukturelemente auf, die in besonders bevorzugter Ausführungsform derart ausgebildet sind, dass sie ineinander greifen. Insbesondere sind die beiden Flächenelemente mit komplementären Strukturelementen ausgebildet, die insbesondere seitlich zueinander versetzt sind, so dass die Strukturelemente ineinander greifen können. Hierbei handelt es sich in bevorzugter Ausführungsform bei den Strukturelementen um Prismen. Von den derart ausgewählten Reflexionsbereichen wird somit Licht in unterschiedlichen Winkelbereichen totalreflektiert. Bei einer Kraftfahrzeug-Sonnenblende hat dies den Vorteil, dass eine äußerst flache bzw. dunne Sonnenblende ausgebildet werden kann und durch Verschwenken der Sonnenblende je nach Stand der Sonne die Sonne von einem der Bereiche totalreflektiert wird. Es handelt sich somit in bevorzugter Ausführungsform um ein einzelnes Flächenelement mit unterschiedlichen Reflexionsbereichen. Vorzugsweise sind zwei insbesondere komplementäre Flächenelemente vorgesehen.

Dies ist insbesondere beim erfindungsgemäßen Ausgestalten einer Kraftfahrzeug-Sonnenblende als Verschattungselement vorteilhaft, da hierdurch das Sichtfeld des Betrachters erheblich geringer beeinträchtigt wird. Insbesondere bei tief stehender Sonne kann somit durch die erfindungsgemäße Sonnenblende nur die Sonne selbst aus dem Sichtfeld ausgeblendet werden. Aus dem Blickwinkel des Betrachters oberhalb der Sonne angeordnete Elemente, wie beispielsweise Ampeln, sind für den Betrachter weiterhin sichtbar.

Insbesondere bei der Ausbildung des Verschattungselements als Kraftfahrzeug-Sonnenblende ist es besonders bevorzugt, die Reflexionsbereiche streifenförmig auszubilden, wobei es sich bei montierter Sonnenblende insbesondere um horizontal ausgerichtete Reflexionsbereiche handelt. Jedoch auch bei Fenster-Verschattungselementen ist eine horizontale Ausrichtung von streifenförmigen Reflexionsbereichen bevorzugt.

Vorzugsweise weist das Verschattungselement eine Schwenkachse auf, um die das gesamte Verschattungselement schwenkbar ist. Die Schwenkachse ist vorzugsweise horizontal ausgerichtet. Insbesondere sind die streifenförmigen Reflexionsbereiche parallel zur Schwenkachse angeordnet. Die Schwenkachse kann mit einer automatischen Schwenkvorrichtung verbunden sein. Hierbei weist die Schwenkvorrichtung beispielsweise einen Elektromotor auf, um ein sehr exaktes Verschwenken des Verschattungselementes zu ermöglichen. Besonders bevorzugt ist es hierbei, dass die Schwenkvorrichtung einen Sonnenstandssensor aufweist, so dass ein automatisches Nachführen der Verschattungselemente möglich ist. Dies ist bei Fenster-Verschattungselementen vorteilhaft, da somit die Verschattungselemente dem Sonnenstand nachgeführt werden können. Jedoch auch bei Kraftfahrzeug-Sonnenblende ist dies vorteilhaft, da sich der Einfallswinkel der Sonne relativ zum Kraftfahrzeug, beispielsweise beim Fahren im Gebirge, häufig ändert.

Vorzugsweise sind die beiden Flächenelemente komplementär ausgebildet und vorzugsweise lediglich um eine halbe Strukturelement-Breite versetzt, so dass die Strukturelemente ineinander greifen. Die einzelnen Strukturelemente sind somit zueinander komplementär. Hierdurch kann insbesondere die Dicke des Verschattungselements gering gehalten werden. Besonders bevorzugt ist es, dass die zwischen den beiden Flächenelemente angeordnete Zwischenschicht im Wesentlichen stets eine konstante Dicke aufweist. Hierdurch werden insbesondere im transparenten Bereich des Verschattungselements Bildstörungen in Form von Farbsäumen oder leichten Verzerrungen vermieden. Vorzugsweise variiert die Dicke der Zwischenschicht nur um ± 10 %. Erfindungsgemäß ist die Zwischenschicht derart ausgebildet, dass sich die einander gegenüber liegenden Flächenelemente allenfalls im Randbereich berühren. Hierdurch werden Störungen der Totalreflexion vermieden.

Die insbesondere prismenförmig ausgebildeten Strukturelemente erstrecken sich vorzugsweise über die gesamte Breite des Verschattungselements. Es sind somit streifen- oder linienförmige Prismen ausgebildet, die in besonders bevorzugter Ausführungsform horizontal verlaufen. Vorzugsweise weisen die Prismen an der äußeren vom Flächenelement weg weisenden Kante einen Winkel von ca. 90° auf. Insbesondere liegt der Winkel im Bereich von 80° bis 100°. In Abhängigkeit der Materialkombination, d.h. der Materialwahl der Flächenelemente und des Materials der Zwischenschicht, können auch andere Winkel vorgesehen sein. Bei Ausbildung unterschiedlicher Reflexionsbereiche sind die Prismen zueinander verkippt. Dies bedeutet, dass beispielsweise in einen ersten Bereich die Prismen derart angeordnet sind, dass die Seitenflächen einer Außenkante zu einer senkrecht zum Flächenelemente verlaufenden Linie beidseitig einen Winkel von 45° aufweisen. In einem zweiten Bereich, in dem die Prismen verkippt sind, betragen die beiden Winkel beispielsweise 30° und 60° und in einem dritten Bereich 10° und 80°. Hierbei ist die Summe der beiden Winkel stets ca. 90°.

Der Brechungsindex der Zwischenschicht muss sich ausreichend vom Brechungsindex der Flächenelemente unterscheiden, um Totalreflexion zu gewährleisten. Insbesondere ist der Brechungsindex der Flächenelemente vorzugsweise mindestens 30 %, und besonders bevorzugt mindestens 50 %, größer als der Brechungsindex der Zwischenschicht. Besonders bevorzugt ist es, eine gasförmige Zwischenschicht vorzusehen, bei der es sich insbesondere um Luft handelt. Die Flächenelemente sind vorzugsweise aus einem Kunststoff mit einem Brechungsindex von n = 1,2 bis 2, vorzugsweise von 1,4 bis 1,75 hergestellt. Insbesondere sind Polycarbonat und Polymethylmetacrylat (PMMA) zur Herstellung der Flächenelemente geeignet. Hierbei können die Flächenelemente beispielsweise durch Spritzgießverfahren oder Folien-Extrusion hergestellt werden.

Das als Fenster-Verschattungselement ausgebildete Verschattungselement erstreckt sich über die gesamte Breite des Fensters und weist eine Höhe von 2 bis 20 cm auf. Über die Höhe des Fensters sind sodann lamellenartig mehrere Verschattungselemente angeordnet, die um einzelne Schwenkachsen verschwenkt werden können. In bevorzugter Ausführungsform können die einzelnen lamellenartigen Fenster-Verschattungselemente auch zwischen zwei Scheiben angeordnet sein.

Vorzugsweise ist ein Sonnenstandssensor vorgesehen, durch den die einzelnen Fenster-Verschattungselemente bzw. die Sonnenblende automatisch dem Sonnenstand nachgeführt werden können.

Die Herstellung des erfindungsgemäßen Verschattungselements erfolgt vorzugsweise durch Verbinden der beiden Flächenelemente unter Einbringung einer Zwischenschicht. Zusätzlich kann bei einem beispielsweise im Wesentlichen rechteckigen Verschattungselement, eine Längsseite mit einem Versteifungselement o.dgl. verbunden sein. Mit Hilfe des Versteifungselements, das beispielsweise zylindrisch ausgebildet ist, erfolgt ein Verschwenken des Verschattungselements. Das Verschattungselement kann mit einem entsprechenden Gelenk oder unmittelbar mit einer automatischen Schwenkvorrichtung verbunden sein.

Besonders bevorzugt ist es, als Zwischenschicht eine gasförmige Schicht vorzusehen, bei der es sich insbesondere um Luft handelt. Um eine exakte Positionierung der beiden insbesondere identischen Flächenelemente zueinander zu gewährleisten, erfolgt vorzugsweise ein Verbinden der beiden Flächenelemente bei Unterdruck von beispielsweise 0,9 bar. Die beiden Verbindungselemente werden dann insbesondere im Randbereich abdichtend miteinander verbunden, so dass ein abgedichteter Raum entsteht. Der abgedichtete Raum bildet sodann die Zwischenschicht aus. Die Zwischenschicht weist sodann die verbleibende Luft auf, die sich gleichmäßig zwischen den beiden Flächenelementen verteilt.

Das vorstehend beschriebene Verschattungselement ist insbesondere auch für den Einsatz in Flugzeug-Cockpits geeignet.

Ferner kann das erfindungsgemäß ausgebildete Verschattungselement auch als Entblendeinrichtung oder Reflektor verwendet werden. Insbesondere ist das Verschattungselement als Entblendenrichtung von Kunstlichtquellen, beispielsweise am Arbeitsplatz, einsetzbar. Als Reflektor kann das Verschattungselement beispielsweise für Kunstlichtquellen eingesetzt werden. Eine weitere Einsatzmöglichkeit besteht als Reflektor in einem bildgebenden System, insbesondere einem transparenten Projektionssystem, wie beispielsweise das Projektionssystem "Holopro" der G + B pronova GmbH.

Ebenso ist es möglich, die Flächenelemente des Verschattungselements derart anzuordnen, dass die Strukturelemente nach außen, d.h. voneinander weg weisen. Auch hierbei erfolgt in Abhängigkeit des Licht-Einfallswinkels eine Totalreflexion.

In nicht segmentierter Ausführungsform ist das Verschattungselement insbesondere als einzelne Lamelle zur Verschattung von Fenstern geeignet.

Die einzelnen Lamellen der Verschattungselemente sind vorzugsweise identisch ausgebildet und entsprechend einer Lamellen-Jalousie angeordnet.

Nachfolgend wird die Erfindung anhand einer bevorzugten Ausführungsform unter Bezugnahme auf die anliegenden Zeichnungen näher erläutert.

Es zeigen:
- Fig. 1: eine prinzipielle Darstellung eines Reflexionsbereichs als schematische Querschnittsansicht,
- Fig. 2: eine prinzipielle Darstellung eines weiteren Reflexionsbereichs in schematischer Querschnittsansicht, wobei die Prismen-Strukturelemente gegenüber dem in Fig. 1 dargestellten Reflexionsbereich verkippt sind,
- Fig. 3: eine schematische Querschnittsansicht eines Verschattungselements mit drei unterschiedlichen Reflexionsbereichen und
- Fig. 4: eine schematische Seitenansicht einer Sonnenblende.

Bei dem in den Fign. dargestellten Ausführungsbeispiel handelt es sich um Flächenelemente aus Polycarbonat. Die Zwischenschicht besteht aus Luft.

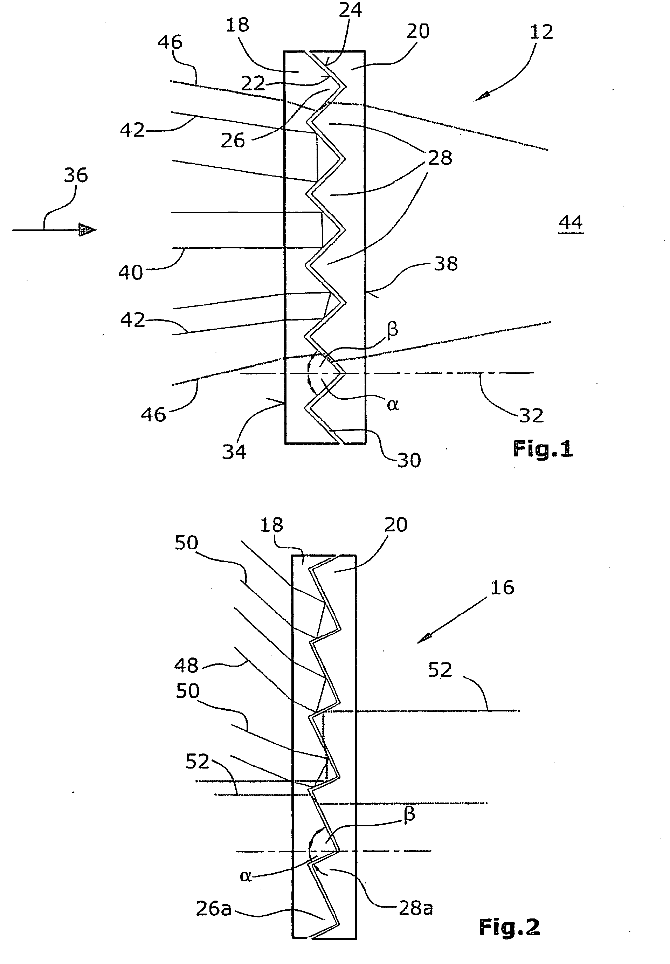

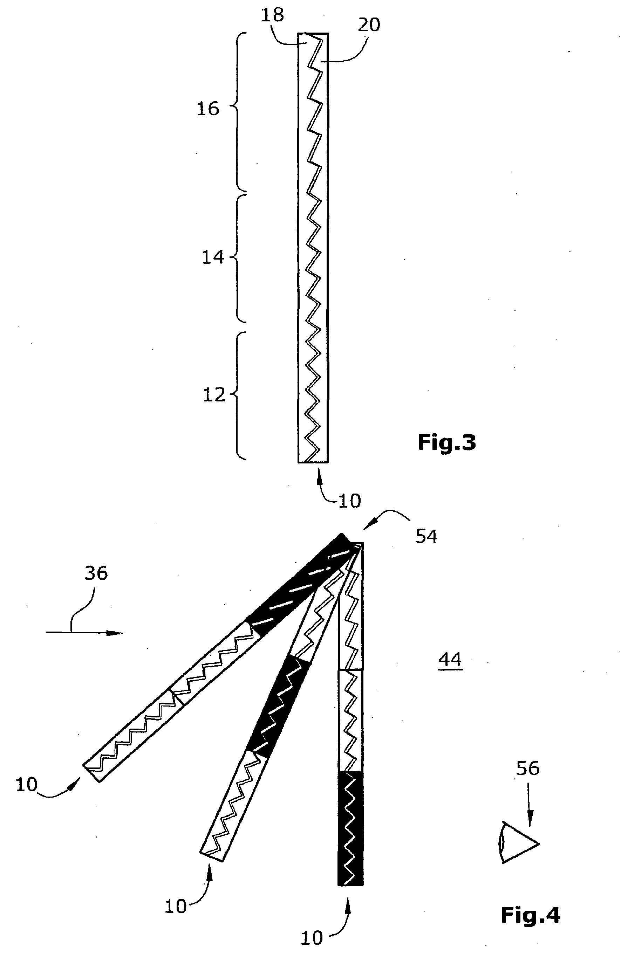

Ein Verschattungselement 10 (Fig. 3) weist unterschiedliche Reflexionsbereiche 12,14,16 auf. Die Reflexionsbereiche 12 und 16 sind in den Fign. 1 und 2 dargestellt.

Das Verschattungselement 10 weist zwei einander gegenüber liegende Flächenelemente 18,20 auf. Die beiden Flächenelemente 18,20 weisen an ihren Innenseiten 22,24 Strukturelemente 26,28 auf. Die Strukturelemente 26,28 weisen über die Breite des Verschattungselements, d.h. senkrecht zur Zeichenebene der Fign. 1, 2 und 3, einen konstanten Querschnitt auf. Es handelt sich somit um streifen- bzw. linienförmig angeordnete Prismen. Die einander gegenüber liegenden Prismen 26,28 sind identisch und zueinander um eine halbe Prismenweite versetzt angeordnet, so dass jeweils eine Prismenspitze in einem gegenüber liegenden Prismental angeordnet ist. Eine zwischen den beiden Flächenelementen 18,20 ausgebildete Zwischenschicht 30, bei der es sich insbesondere um eine Luftschicht handelt, weist somit eine im Wesentlichen konstante Dicke auf.

In dem ersten Reflexionsbereich 12 weisen im dargestellten Ausführungsbeispiel die Prismen 26,28 zwei gleichlange Schenkel auf. Die Prismenspitzen sowie Prismentäler weisen einen Winkel von ca. 90° auf.

Eine Mittellinie 32 verläuft senkrecht zu einer Außenseite 34 des Flächenelements 18. Hierbei weist die Außenseite 34 in Richtung der Einstrahlrichtung 36, d.h. insbesondere in Richtung der Sonne. Die Mittellinie 32 ist vorzugsweise auch senkrecht zur Außenseite 38 des Flächenelements 20. Die Prismen weisen an der Spitze zur Mittellinie 32 einen Winkel α sowie einen Winkel β von jeweils 45° auf.

Ein senkrecht zur Außenseite 34 einfallender Lichtstrahl 40 wird beim Eintritt in das Flächenelement 18 nicht gebrochen, sondern an der Innenseite des Flächenelements 18 an einem Strukturelement 26 zweifach totalreflektiert, so dass das Licht wieder an der Außenseite 34 austritt. Lichtstrahlen 42, die mit einer geringen Abweichung von 90°, insbesondere ± 5° bis 9° zur Senkrechten einfallen, werden an der Außenseite 34 des Flächenelements 18 zunächst gebrochen und sodann, wie dargestellt, durch zweifache Totalreflexion an den Strukturelementen 26 durch die Außenseite 34 ausgekoppelt. Die Lichtstrahlen 42 und 40, d.h. sämtliche Lichtstrahlen, die im Bereich von 90° ± 9° auf den Reflexionsbereich 12 des Flächenelements 18 treffen, werden somit totalreflektiert und gelangen nicht auf die Betrachterseite 44. Lichtstrahlen 46 mit einem größeren Winkelunterschied als ± 9° zur Senkrechten werden nicht totalreflektiert, sondern gelangen durch beide Flächenelemente 18,20. Wie aus Fig. 1 ersichtlich, werden die Strahlen 46 nur geringfügig parallel versetzt, so dass lediglich eine geringfügige Verschiebung der Objekte, und keine Verzerrung der Objekte erfolgt.

Das Reflexionsprinzip ist in dem Reflexionsbereich 16 (Fig. 2) prinzipiell entsprechend dem anhand Fig. 1 beschriebenen. Die Strukturelemente 26a,28a sind ebenfalls linienförmige Prismen, die jedoch gegenüber den Strukturelementen 26,28 verkippt sind. Dies bedeutet, dass ein Winkel α < 45° und ein Winkel β > 45° ist. Die Summe der Winkel α + β ergibt weiterhin ca. 90°. Hierdurch erfolgt für Strahlen 48 Totalreflexion. Dasselbe gilt für Strahlen, die gegenüber den Strahlen 48 in einem Winkelbereich von ungefähr ± 9° auf das Verschattungselement auftreffen. Außerhalb dieses Winkelbereichs auftreffende Strahlen, beispielsweise ein Strahl 52, wird nicht reflektiert, sondern tritt an der Außenseite 38 ggf. parallelversetzt aus.

Das in Fig. 3 dargestellte Verschattungselement 10 kann an einer Schwenkachse 54 (Fig. 4) schwenkbar, beispielsweise als Sonnenblende in einem Kraftfahrzeug, befestigt sein. Auf einer Betrachterseite 44 gelangt somit Licht aus einer Richtung 36 je nach Stellung des Verschattungselements 10 nur durch die hell dargestellten Bereiche.

Je nach Neigung des Verschattungselements 10 wird das einfallende Licht in den dunkel dargestellten Bereichen totalreflektiert. Je nach Sonnenstand ist es somit möglich, aus dem Sichtfeld des Betrachters 56 nur einen geringen Streifen auszublenden bzw. zu verschatten. Hierdurch ist das Sichtfeld des Betrachters möglichst geringfügig eingeschränkt und die Sicherheit hierdurch deutlich erhöht.

## Patentansprüche

1. Verschattungselement, insbesondere Kraftfahrzeug-Sonnenblende oder Fenster-Verschattungselement, mit
zwei einander gegenüber liegenden transparenten Flächenelementen (18,20) mit insbesondere auf den aufeinander zu weisenden Innenseiten (22,24) angeordneten Strukturelementen (26,28;26a,28a), die derart ausgebildet sind, dass für Licht innerhalb eines Winkelbereichs Totalreflexion erfolgt, und
einer zwischen den Flächenelementen (18,20) angeordneten Zwischenschicht (30) mit einem gegenüber den Flächenelementen (18,20) unterschiedlichen Brechungsindex,
**dadurch gekennzeichnet, dass**
die Flächenelemente (18,20) Reflexionsbereiche (12,14,16) mit unterschiedlich ausgebildeten Strukturelementen (26,28;26a,28a) aufweisen, wobei in den einzelnen Reflexionsbereichen (12,14,16) für Licht in unterschiedlichen Winkelbereichen Totalreflexion erfolgt.

2. Verschattungselement nach Anspruch 1, **dadurch gekennzeichnet, dass** die Reflexionsbereiche (12,14,16) streifenförmig sind, wobei der Reflexionsbereich (12,14,16) insbesondere horizontal verläuft.

3. Verschattungselement nach Anspruch 2, **gekennzeichnet durch** eine Schwenkachse (54), um die das Verschattungselement (10) verschwenkbar ist.

4. Verschattungselement nach einem der Ansprüche 1-3, **dadurch gekennzeichnet, dass** die Strukturelemente (26,28;26a,28a) beider Flächenelemente (18,20) zueinander komplementär ausgebildet und angeordnet sind.

5. Verschattungselement nach einem der Ansprüche 1-4, **dadurch gekennzeichnet, dass** die Strukturelemente (26,28;26a,28a) derart zueinander angeordnet sind, dass die Zwischenschicht (30) im Wesentlichen eine konstante Dicke aufweist.

6. Verschattungselement nach einem der Ansprüche 1-5, **dadurch gekennzeichnet, dass** die Strukturelemente (26,28;26a,28a) Prismen aufweisen, die sich vorzugsweise über eine gesamte Breite des Verschattungselements (10) erstrecken.

7. Verschattungselement nach einem der Ansprüche 1-6, **dadurch gekennzeichnet, dass** die Prismen innerhalb der einzelnen Reflexionsbereiche (12,14,16) komplementär ausgebildet sind und in den einzelnen Reflexionsbereichen (12,14,16) zueinander verkippt sind.

8. Verschattungselement nach Anspruch 7, **dadurch gekennzeichnet, dass** die Prismen mit geringerem Abstand zur Schwenkachse (54) zumindest bereichsweise stärker verkippt sind als die Prismen mit einem größeren Abstand zur Schwenkachse (54).

9. Verschattungselement nach einen der Ansprüche 1-8, **dadurch gekennzeichnet, dass** die Flächenelemente (18,20) einen Brechungsindex aufweisen, der mindestens 30 %, vorzugsweise mindestens 50 % größer ist als der Brechungsindex der Zwischenschicht (30).

10. Verschattungselement nach einem der Ansprüche 1-9, **dadurch gekennzeichnet, dass** die Zwischenschicht (30) gasförmig ist, insbesondere Luft aufweist.

11. Verschattungselement nach einem der Ansprüche 1-10, **gekennzeichnet durch** eine automatische Schwenkvorrichtung zum Verschwenken des Verschattungselements (10) um die Schwenkachse (54), wobei die Schwenkvorrichtung vorzugsweise mit einem Sonnenstandsensor verbunden ist und zum Verschwenken einen Elektromotor aufweist.

12. Verfahren zur Herstellung eines Verschattungselements nach einem der Ansprüche 1-11, **dadurch gekennzeichnet, dass** die beiden Flächenelemente (18,20) unter Einbringung einer Zwischenschicht miteinander verbunden werden, und in einem Randbereich abdichtend miteinander verbunden werden, so dass ein abgedichteter Raum entsteht.

13. Verfahren nach Anspruch 12, **dadurch gekennzeichnet, dass** das Verbinden unter Unterdruck erfolgt, wobei die Flächenelemente (18,20) derart miteinander verbunden werden, dass ein die Zwischenschicht (30) ausbildender abgedichteter Raum entsteht.

## Claims

1. Blind element, in particular a vehicle sunshield or a window blind element, comprising:
two opposing transparent surface elements (18, 20) with structure elements (26, 28; 26a, 28a) arranged in particular on the inner sides (22, 24) facing each other, the structure elements being designed such that total reflection occurs for light within an angular range, and
an intermediate layer (30) arranged between the surface elements (18, 20) and having an index of refraction different from the surface elements (18,20),
**characterized in that**
the surface elements (18, 20) have reflection zones (12, 14, 16) with differently designed structure elements (26, 28; 26a, 28a), wherein in the individual reflection zones (12, 14, 16) total reflection occurs for light in different angular ranges.

2. Blind element of claim 1, **characterized in that** the reflection zones (12, 14, 16) are strip-shaped, wherein the reflection zone (12, 14, 16) extends in particular horizontally.

3. Blind element of claim 2, **characterized by** a pivot axis (54) about which the blind element (10) may be pivoted.

4. Blind element of one of claims 1-3, **characterized in that** the structure elements (26, 28; 26a, 28a) of both surface elements (18, 20) are formed and arranged so as to be complementary.

5. Blind element of one of claims 1-4, **characterized in that** the structure elements (26, 28; 26a, 28a) are arranged with respect to each other such that the intermediate layer (30) has a substantially constant thickness.

6. Blind element of one of claims 1-5, **characterized in that** the structure elements (26, 28; 26a, 28a) comprise prisms that preferably extend across the entire width of the blind element (10).

7. Blind element of one of claims 1-6, **characterized in that** the prisms in the individual reflection zones (12, 14, 16) are designed to be complementary and are inclined with respect to each other in the individual reflection zones (12, 14, 16).

8. Blind element of claim 7, **characterized in that** the prisms closer to the pivot axis (54) are inclined more, at least in portions, than the prisms farther from the pivot axis (54).

9. Blind element of one of claims 1-8, **characterized in that** the surface elements (18, 20) have an index of refraction at least 30%, preferably at least 50%, higher than the index of refraction of the intermediate layer (30).

10. Blind element of one of claims 1-9, **characterized in that** the intermediate layer (30) is gaseous, in particular comprising air.

11. Blind element of one of claims 1-10, **characterized by** an automatic pivoting device for pivoting the blind element (10) about the pivot axis (54), the pivoting device preferably being connected with a sun angle sensor and comprising an electric motor for pivoting.

12. Method for manufacturing a blind element of one of claims 1-11, **characterized in that** the two surface elements (18, 20) are joined with interposition of an intermediate layer, and are sealingly joined in an edge zone such that a sealed space is formed.

13. Method of claim 12, **characterized in that** the joining is performed under a vacuum, said surface elements (18, 20) being joined such that a sealed space defining the intermediate layer (30) is formed.

## Revendications

1. Élément faisant de l'ombrage, notamment pare-soleil pour véhicule automobile, ou élément ombreux pour fenêtre, comportant
deux éléments de surface (18, 20) transparents disposés l'un en face de l'autre et dotés notamment d'éléments structuraux (26, 28 ; 26a, 28a) qui sont disposés sur les côtés intérieurs dirigés l'un vers l'autre et qui sont conformés de façon à effectuer une réflexion totale de la lumière à l'intérieur d'une région angulaire, et
une couche intermédiaire (30) disposée entre les éléments de surface (18, 30) et présentant un index de réfraction différent de celui des éléments de surface (18, 20),
**caractérisé en ce que**
les éléments de surface (18, 20) présentant des régions de réflexion (12, 14, 16) dotées d'éléments structuraux (26, 28 ; 26, 28) de différentes conformations, une réflexion totale de la lumière dans différentes régions angulaires étant effectuée dans les régions de réflexion individuelles (12, 14, 16).

2. Élément ombreux selon la revendication 1, **caractérisé en ce que** les régions de réflexion (12, 14, 16) sont en forme de bande, la région de réflexion (12, 14, 16) s'étendant notamment horizontalement.

3. Élément ombreux selon la revendication 2, **caractérisé par** un axe de pivotement (54) autour duquel l'élément ombreux (10) peut pivoter.

4. Élément ombreux selon l'une des revendications 1 à 3, **caractérisé en ce que** les éléments structuraux (26, 28 ; 26a, 28a) des deux éléments de surface (18, 20) sont conformés et disposés de façon complémentaire l'un par rapport à l'autre.

5. Élément ombreux selon l'une des revendications 1 à 4, **caractérisé en ce que** les éléments structuraux (26, 28 ; 26a, 28a) sont disposés l'un par rapport à l'autre de telle sorte que la couche intermédiaire (30) présente une épaisseur sensiblement constante.

6. Élément ombreux selon l'une des revendications 1 à 5, **caractérisé en ce que** les éléments structuraux (26, 28 ; 26a, 28a) comportent des prismes qui s'étendent de préférence sur toute la largeur de l'élément ombreux (10).

7. Élément ombreux selon l'une des revendications 1 à 6, **caractérisé en ce que** les prismes sont conformés de façon complémentaire à l'intérieur des régions de réflexion individuelles (12, 14, 16) et sont inclinés l'un vers l'autre dans les régions de réflexion individuelles (12, 14, 16).

8. Élément ombreux selon la revendication 7, **caractérisé en ce que** les prismes se trouvant à une distance plus faible de l'axe de pivotement (54) sont davantage inclinés au moins par région que les prismes se trouvant à une distance plus grande de l'axe de pivotement (54).

9. Élément ombreux selon l'une des revendications 1 à 8, **caractérisé en ce que** les éléments de surface (18, 20) présentent un index de réfraction qui est supérieure d'au moins 30%, de préférence d'au moins 50%, à l'index de réfraction de la couche intermédiaire (30).

10. Élément ombreux selon l'une des revendications 1 à 9, **caractérisé en ce que** la couche intermédiaire (30) se présente sous forme gazeuse, notamment est de l'air.

11. Élément ombreux selon l'une des revendications 1 à 10, **caractérisé par** un dispositif de pivotement automatique destiné à faire pivoter l'élément ombreux (10) autour de l'axe de pivotement (54), le dispositif de pivotement étant relié de préférence à un capteur de niveau de soleil et comportant un moteur électrique destiné à effectuer le pivotement.

12. Procédé de fabrication d'un élément ombreux selon l'une des revendications 1 à 11, **caractérisé en ce que** les deux éléments surface (18, 20) sont reliés entre eux en formant une couche intermédiaire, et sont reliés entre eux de façon étanche dans une région de bordure de manière à obtenir un espace étanche.

13. Procédé selon la revendication 12, **caractérisé en ce que** la liaison est effectuée sous vide, les éléments de surface (18, 20) étant reliés entre eux de manière à obtenir un espace étanche formant la couche intermédiaire (30).
